# Europäisches Patentamt

## European Patent Office

## Office européen des brevets

(19)

(11) Veröffentlichungsnummer: **0 007 980**
**A1**

(12)

# EUROPÄISCHE PATENTANMELDUNG

(21) Anmeldenummer: 79101616.5

(22) Anmeldetag: 28.05.79

(51) Int. Cl.³: **F 16 B 15/04,** F 16 B 13/12, E 21 B 10/04

(30) Priorität: 29.05.78 DE 2823372

(71) Anmelder: **Schäfers, Heinrich B., Wachmannstrasse 22, D-2800 Bremen (DE)**

(43) Veröffentlichungstag der Anmeldung: 20.02.80 **Patentblatt 80/4**

(72) Erfinder: **Schäfers, Heinrich B., Wachmannstrasse 22, D-2800 Bremen (DE)**

(84) Benannte Vertragsstaaten: **AT BE CH FR GB IT LU NL SE**

(74) Vertreter: **Eisenführ & Speiser, Eduard-Grunow-Strasse 27, D-2800 Bremen 1 (DE)**

(54) Spreizbefestiger sowie Werkzeug und Verfahren zum Vorbereiten von Löchern für solche Befestiger.

(57) Ein Betätigungssystem zur Verwendung bei relativ weichem Baumaterial (Gasbeton o. ä.) besteht aus einem Spreizbefestiger (10), der entweder direkt eingeschlagen oder in ein Sackloch eingesetzt wird, welches vornehmlich nach einem bestimmten Verfahren mit einem besonderen Werkzeug in das Baumaterial eingebracht wird. Der Spreizbefestiger (10) zeichnet sich durch eine Glasfaser-Armierung (26) und spezielle Formgebungen aus. Der Einsatz des Werkzeuges führt unter Komprimierung und Auswurf des Bohrkleins zur Bildung eines Kegelstumpfes am Grund des Sackloches, der die Spreizanker (16) des Befestigers auseinanderdrückt.

EP 0 007 980 A1

ACTORUM AG

Beschreibung

Die Erfindung bezieht sich auf einen Spreizbefestiger sowie ein Werkzeug und ein Verfahren zum Vorbereiten von Löchern zum Einsetzen solcher Befestiger. Bei dem Spreizbefestiger handelt es sich um einen solchen aus einem elastischen Material zum Eintreiben in aus einem relativ weichen Baumaterial bestehende Wände o. dgl., mit einem Schaft, von dessen einem Ende mehrere integral angeformte endseitig zugespitzte Ankerabschnitte in Axialrichtung abstehen.

Ein solcher, auch als Spreiznagel bezeichneter Befestiger ist beispielsweise aus der DE-PS 1 887 bekannt, hat aber den Nachteil, daß seine Spreizfüße relativ unkontrollierbar in das Bohrmaterial eindringen und, sofern sie nicht beim Einschlagen bereits abbrechen, der Befestigungsstelle selten die gewünschte Festigkeit verleihen. Oft sitzen die eingeschlagenen Spreiznägel auch noch schief. Ferner läßt sich ein solcher Spreiznagel selten genau an die vorgesehene Stelle bringen, weil er immer bestrebt ist, seitlich nach der einen oder anderen Seite auszuweichen.

Ähnliches gilt für eine andere, unter der Bezeichnung Spreizanker bekannte Art von Spreizbefestigern.

Aufgabe der Erfindung ist es, neuartige Spreizbefestiger der eingangs genannten Art sowie ein Werkzeug und ein Verfahren zum Vorbereiten von Löchern zum Einsetzen derselben vorzuschlagen, mit denen die genannten Nachteile des Standes der Technik vermieden werden können.

Erfindungsgemäß wird diese Aufgabe mit einem Spreizbefestiger gelöst, der sich dadurch auszeichnet, daß der Schaft und die Ankerabschnitte aus einem Kunststoff bestehen, der durch in Axialrichtung verlegte und sich durchgehend über im wesentlichen die gesamte Länge des Befestigers erstreckende Glasfasern verstärkt ist.

Verfahrensseitig wird diese Aufgabe dadurch gelöst, daß ein mit einer außenliegenden ringförmigen Schneide und einem schlanken Innenkegel versehenes rohrartiges Werkzeug in das Material eingetrieben und der durch einen hinter dem Innenkegel gelegenen Innenzylinderabschnitt des rohrartigen Werkzeugs geformte Baumaterialkern durch einen Rohrerweiterungssprung, der eine Art Abrißkante bildet, in Stücke zerbrochen wird, so daß auf dem Lochboden ein Kegelstumpf stehengelassen wird, von dessen Außenoberfläche die zugespitzten Enden der Ankerabschnitte des Spreizbefestigers nach außen abgedrängt werden.

Das Lochherstellwerkzeug ist dadurch gekennzeichnet, daß ein hohler zylindrischer Schaft an seinem freien Ende eine außenliegende ringförmige Schneide aufweist, die innen an einen Hohlkegelstumpf angrenzt, dessen entgegengesetztes Ende in einen Hohlzylinderabschnitt übergeht, dessen in Arbeitsrichtung hinteres Ende durch eine stufenartige Erweiterung des Rohrinnendurchmessers nach Art einer Abrißkante für durch den Hohlkegelstumpf komprimiertes Bearbeitungsmaterial ausgebildet ist.

Mit einem solchen Werkzeug lassen sich von Hand
erstmalig äußerst form- und lagegenaue Löcher
zum Einsetzen von Spreizbefestigern in Baumaterial einbringen, welche so ausgebildet
sind, daß der Spreizbefestiger äußerst genau
und mit größtmöglicher Haltekraft in das Baumaterial eingetrieben werden kann.

Nachstehend wird die Erfindung unter Bezugnahme
auf eine Zeichnung näher erläutert. Darin
zeigen:

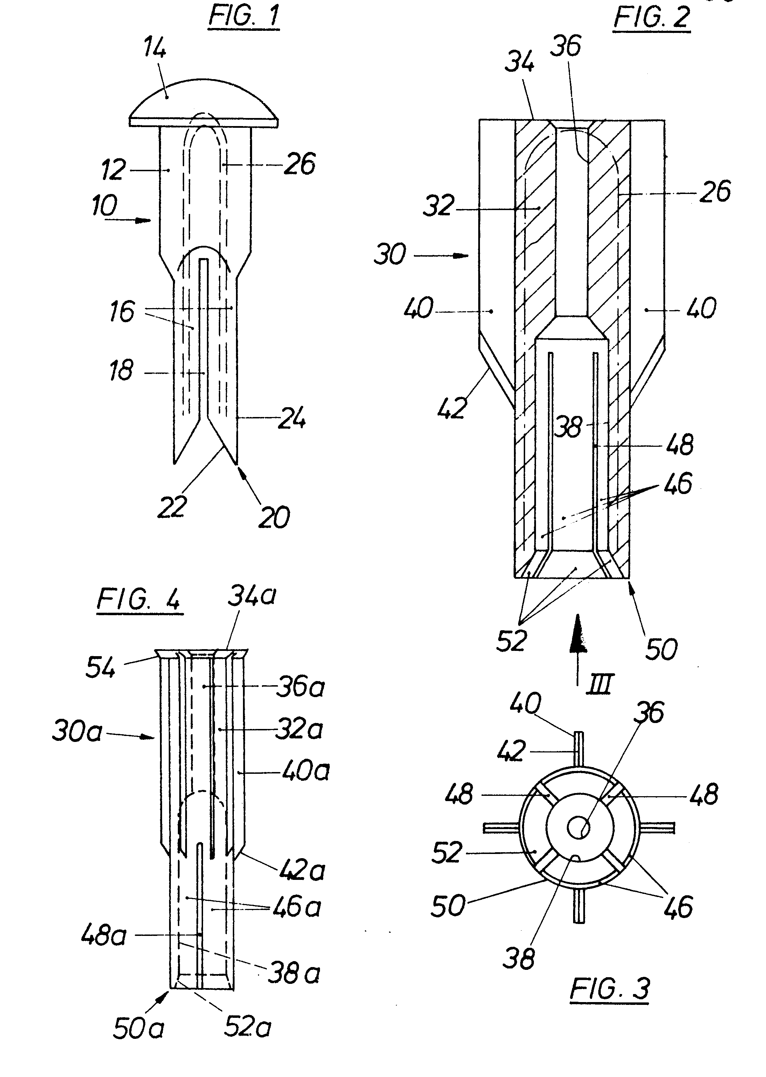

Fig. 1    einen Spreiznagel in Seitenansicht,

Fig. 2
und  3    einen Spreizanker in einem Längsschnitt
          und in einer Stirnansicht aus Richtung
          III von Fig. 2,

Fig. 4    eine Seitenansicht eines abgewandelten
          Spreizankers,

Fig. 5    einen Längsschnitt durch ein Werkzeug
          zum Vorbereiten von Löchern für das
          Einsetzen von Spreizbefestigern,

Fig. 6    einen Schnitt durch ein mit einem solchen
          Werkzeug hergestelltes fertiges Loch mit
          eingesetztem Spreiznagel, und

Fig. 7    ein gegenüber Fig. 5 abgewandeltes Werkzeug.

Die in Fig. 1 dargestellte Ausführung eines erfindungsgemäßen Spreizbefestigers ist ein aus einem geeigneten
Werkstoff wie beispielsweise Nylon einstückig hergestellter Spreiznagel 10, an dem ein zylindrischer
Schaft 12, ein linsenähnlicher Kopf 14 sowie zwei durch
einen relativ breiten Spalt 18 voneinander getrennte

- 4 -

0007980

Ankerabschnitte 16 zu unterscheiden sind. Der Spreiznagel 10 ist durch U-förmig in seinem Innern verlegte durchgehende Glasfaserstränge 26 wirksam verstärkt. Diese Glasfaserstränge gehen von dem Ende des einen Ankerabschnitts bis in den Kopf 14, sind dort umgelegt und enden am Ende des anderen Ankerabschnitts 16. Durch diese Glasfaserstränge 26 werden Brüche in einem oder beiden Ankerabschnitten 16 beim Eintreiben des Spreiznagels in ein Baumaterial wie beispielsweise Gasbeton mit Sicherheit vermieden. Jeder der beiden Ankerabschnitte 16 ist an seinem freien Ende mit einer außenliegenden Schneide 20 versehen, welche innenseitig durch eine schräg nach innen und oben verlaufende Keilfläche 22 begrenzt ist. Die an die Schneide 20 angrenzende Außenflanke 24 jedes Ankerabschnitts 16 verläuft dagegen glatt und linear bis zum Schaftansatz.

Während man mit Spreiznägeln 10 gewöhnlich gelochte Werkstücke wie Fassadenträger o. dgl. an Mauern befestigt, ohne daß zusätzliche Befestigungselemente benötigt werden, werden die in den Fig. 2 bis 4 der Zeichnung dargestellten Spreizanker vollständig in das Baumaterial eingetrieben, so daß ihre Anbringungs-Stirnfläche 34 bzw. 34a mit der Baumaterialvorderfläche fluchtet. Diese Spreizanker 30 bzw. 3oa sind rohrförmig ausgebildet und besitzen eine relativ enge Zentralbohrung 36 bzw. 36a, in die beispielsweise eine dazu passende Schraube eingedreht wird, welche auch noch selbstschneidend ausgebildet sein kann und sich ihr eigenes Gewinde in die Zentralbohrung schneidet. Zu befestigende Bauteile werden dann mit Hilfe einer solchen zusätzlichen Schraube an dem Spreizanker 30 bzw.30a fixiert.

Der Spreizanker 30 in Fig. 2 und 3 besitzt am unteren Ende seines im wesentlichen zylindrischen Schaftes 32 einen hohlen zylindrischen Ansatz, der durch zwei zueinander senkrechte Axialschlitze segmentartig in vier Ankerabschnitte 46 von jeweils ringsegmentförmigem Querschnitt unterteilt ist. Auch dieser Spreizanker 30 ist durch durchgehende, in Fig. 2 strichpunktiert angedeutete Glasfaserstränge 26 verstärkt, die jeweils vom Ende eines der Ankerabschnitte 46 bis dicht an die Stirnfläche 34 verlaufen, dort U-förmig umgelegt und bis zum Ende des gegenüberliegenden Ankerabschnitts 46 zurückgeführt sind. Die innere Begrenzung sämtlicher Ankerabschnitte bildet eine konzentrisch zur Zentralbohrung 36 verlaufende Fußbohrung 38, und durch die Axialschlitzung bei der Herstellung der Ankerabschnitte 46 sind vier Spalte 48 verblieben.

Die in der Stirnansicht teilzylindrischen Ankerabschnitte 46 besitzen an ihrer Außenkante eine teilzylindrische Schneide 50. Die Schneide 50 ist mit der Oberfläche der Fußbohrung 38 durch eine Hohlkegelfläche 52 verbunden.

Die Außenseite des Schaftes 32 ist mit insgesamt vier diametral gegenüberliegenden Flügelabschnitten 40 besetzt, welche in Eintreibrichtung vorn liegende und schräg nach außen und hinten verlaufende Schneiden 42 aufweisen.

Beim Eintreiben des Spreizankers 30 in ein Baumaterial wie beispielsweise Gasbeton dringen zunächst die Schneiden 50 und dann die Hohlkegelflächen 52 in das Baumaterial ein. Dadurch werden die glasfaserverstärkten Ankerabschnitte 46 nach außen auseinander gespreizt. Anschließend dringen die
Flügelabschnitte 40 in das Baumaterial ein.
Durch die Schneiden 42 an ihren Frontkanten
erfolgt ein Komprimieren des angrenzenden
Baumaterials. Dadurch wird der Spreizanker 30
dauerhaft und mit höchster Festigkeit im Baumaterial festgehalten.

Der in Fig. 4 in einer Seitenansicht dargestellte, ebenfalls durch nicht dargestellte
Glasfaserstränge verstärkte Spreizanker 30a
unterscheidet sich von dem zuvor beschriebenen
im wesentlichen nur dadurch, daß er mehr als
vier über den Umfang verteilte Flügelabschnitte
40a, die dafür nur als dünne spitzkantige
Rippen ausgebildet sind, und ferner eine Art
Kopf in Form eines Kragens 54 unterhalb seiner
Anbringungs-Stirnfläche 34a besitzt. Die übrigen,
hier mit dem Zusatz a bezeichneten Einzelheiten
des Spreizankers 30a stimmen im wesentlichen mit
den zuvor in Verbindung mit Fig. 2 und 3 beschriebenen überein und brauchen daher nicht näher
erläutert zu werden. Der Kragen 54 verleiht dem
Spreizanker 30a eine vergrößerte Anbringungs-
Stirnfläche 34 und definiert seine Eintreibtiefe
in das Baumaterial.

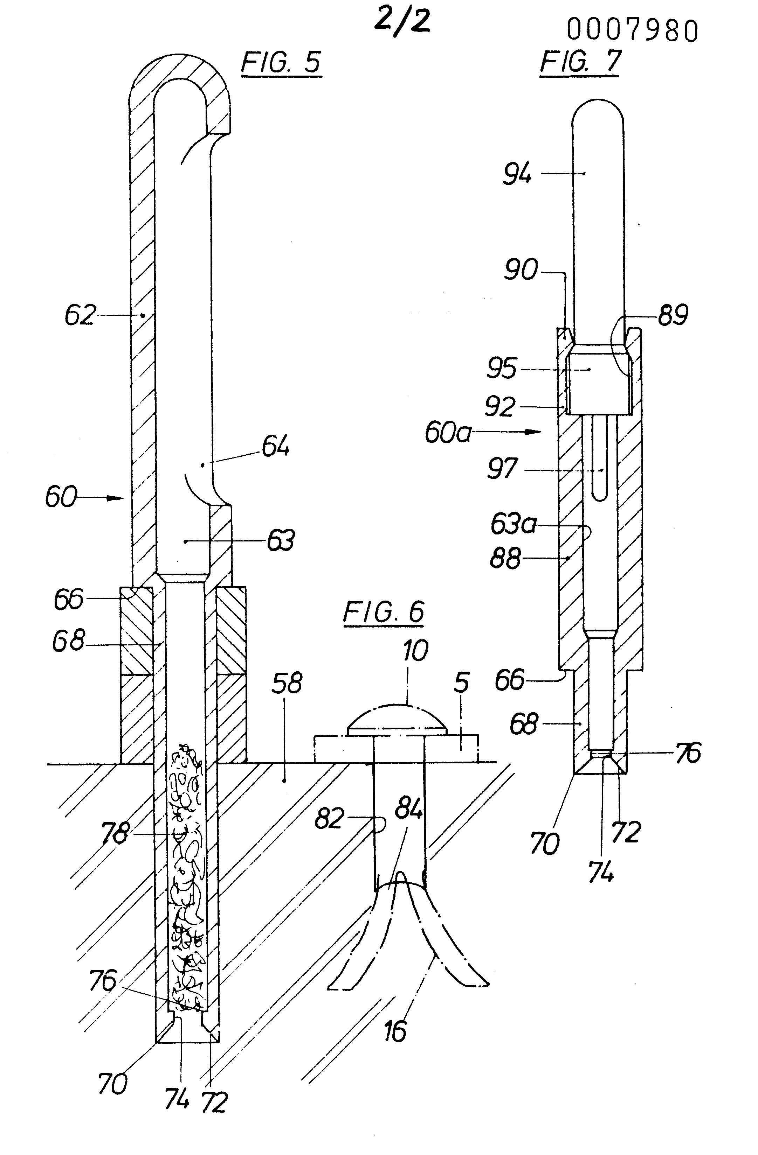

Zum Einsetzen der Spreiznägel 10 gemäß Fig. 1 oder
der Spreizanker 30 bzw. 30a gemäß Fig. 2 bis 4
empfiehlt es sich, das in Fig. 6 schematisch dargestellte vorbereitete Montageloch 82 zu benutzen.
Dieses Montageloch 82 bildet an seinem Grund einen Kegelstumpf 84, welcher komplementär zu den Schneiden 20 bzw. 50 mit Keilfläche 22 bzw. Hohlkegelfläche 52 der Spreizbefestiger gestaltet ist. Wie sich aus Fig. 6 entnehmen läßt, lenkt dieser Kegelstumpf 84 die Ankerabschnitte 16 (ähnliches gilt für die Ankerabschnitte 46) optimal nach außen, so daß der Spreizbefestiger mit maximaler Haltekraft im Baumaterial fixiert wird.

Zur Herstellung solcher Montagelöcher 82 kann mit Vorteil ein Lochwerkzeug 60 bzw. 60a gemäß Fig. 5 oder 7 benutzt werden. Solche Lochwerkzeuge werden einfach von Hand in das relativ weiche Baumaterial wie beispielsweise Gasbeton, Gipsplatten o. dgl. eingetrieben.

Das Lochwerkzeug 60 von Fig. 5 besteht aus einem Hohlgriff 62 mit innerem Abführkanal 63 für Bohrklein und einer seitlichen Auslaßöffnung 64, durch die man das Bohrklein entfernen kann. Das in Arbeitsrichtung vordere Ende des Hohlgriffs 62 geht mit einer ringförmigen Schulter 66 in einen dünneren, außen durchgehend zylindrisch ausgebildeten Hohldorn 68 über. Das vordere Ende der Außenoberfläche des Hohldorns 68 grenzt an eine Ringschneide 70 an, welche innenseitig durch einen relativ kurzen Innenkegel 72 begrenzt ist. An den Innenkegel 72 grenzt ein kurzer Zylinderabschnitt 74 an, der mit einem nur wenige zehntel Millimeter betragenden ringförmigen Erweiterungssprung 76 in den ansonsten durchgehenden und gleichförmigen Innendurchmesser des restlichen Hohldorns 68 übergeht.

Der Hohldorn 68 des Lochwerkzeugs 60 in Fig. 5 ist relativ lang ausgebildet und bestimmt die maximale Tiefe eines herstellbaren Montageloches 82 (Fig. 6). Werden kürzere Montagelöcher benötigt wie in Fig. 5 dargestellt, dann werden einfach Distanzringe 80 auf den Hohldorn 68 aufgeschoben, die darauf beispielsweise mit Friktionssitz haften bleiben und bei Bedarf wieder entfernt oder durch andere Ringe ersetzt werden können. Im Betrieb drückt man das Lochwerkzeug 60 in das mit 58 bezeichnete Baumaterial wie beispielsweise Gasbeton, Gips o. dgl. ein. Dabei bildet der Außenzylinder des Hohldorns 68 die Außenwand des Montageloches 82, und das vom Innenkegel 72 verdrängte Material wird zu einem Kern komprimiert, der beim Passieren des Erweiterungssprunges 76, der eine Abrißkante bildet, zu Bohrklein 78 zerbröckelt und in loser Anordnung den Innenraum des Hohldorns 68 füllt. Sobald die durch die Distanzringe 80 eingestellte Montagelochtiefe erreicht ist, zieht man das Lochwerkzeug 60 aus dem Montageloch heraus und entfernt das Bohrklein 78 durch die Auslaßöffnung 64. Beim Herausziehen des Werkzeugs aus dem Montageloch 82 bleibt der gewünschte Kegelstumpf 84 auf dem Lochgrund stehen.

Das in Fig. 7 dargestellte ähnliche Lochwerkzeug 60a unterscheidet sich im wesentlichen nur im Griffbereich von dem zuvor beschriebenen Lochwerkzeug 60. Einzelheiten, die identisch sind und gleiche Bezugszahlen tragen, brauchen deshalb nicht noch einmal beschrieben zu werden. Dies gilt insbesondere für den Hohldorn 68, der in Fig. 7 lediglich kürzer ausfällt als in Fig. 5.

Der sich an die Schulter 66 anschließende Hohlschaft 88 des Lochwerkzeugs 60a enthält innen einen nach oben an sich offenen, jedoch durch ein aufsteckbares Griffteil 34 verschließbaren Abführkanal 63a für Bohrklein. Zur Aufnahme einer ringförmigen Erweiterung 95 des Griffteils 94 ist in das obere Ende des Hohlschaftes 88 eine Ausdrehung 89 eingearbeitet, und der stehengebliebene relativ dünnwandige Rohrabschnitt des Hohlschaftes im Bereich dieser Ausdrehung 89 ist durch drei über den Umfang verteilte Schlitze 92 in zinnenartige Wandabschnitte unterteilt, die sich innerhalb der Materialelastizität begrenzt nach außen verdrängen lassen, um anschließend ihre ursprüngliche Position wieder einzunehmen. Diese Verdrängung tritt auf, wenn die ringförmige Erweiterung 95 des Griffteils 94 beim Aufstecken oder entnehmen desselben an einer innenliegenden Ringwulst 90 am oberen Ende des Hohlschaftes 88 vorbeigepreßt wird. Auf diese Weise wird das obere Griffteil 94 sicher in der in Fig. 7 dargestellten Position fixiert. Zum Entfernen von Bohrklein wird das Griffteil 94 abgenommen. Es trägt auf seiner in Gebrauchslage innenliegenden Seite einen Stößel 97, mit dem man bei Bedarf im Hohldorn festklemmende Bohrkleinreste ausstoßen kann.

UNS. ZEICHEN: S 577

ANMELDER / INH: SCHÄFERS

AKTENZEICHEN: Neuanmeldung

DATUM: 26. Mai 1978

Heinrich B. Schäfers, Wachmannstraße 22, <u>2800 Bremen</u>

----------------------------------------------------------------

Spreizbefestiger sowie Werkzeug und Verfahren zum
Vorbereiten von Löchern für solche Befestiger

----------------------------------------------------------------

A n s p r ü c h e
==================

1.   Spreizbefestiger aus einem elastischen Material
zum Eintreiben in aus einem relativ weichen Material
bestehende Wände, mit einem Schaft, an dessen einem
Ende mehrere integral angeformte endseitig zugespitzte
Ankerabschnitte in Axialrichtung abstehen, dadurch
gekennzeichnet, daß der Schaft (12; 32) und die
Ankerabschnitte (16; 46) aus einem Kunststoff bestehen, der durch in Axialrichtung verlegte und sich
durchgehend über im wesentlichen die gesamte Länge
des Befestigers (10; 30) erstreckende Glasfasern (26)
verstärkt ist.

2.   Spreizbefestiger nach Anspruch 1, dadurch gekennzeichnet, daß die Glasfasern zu Strängen (26) zusammengefaßt sind, die U-förmig von einem Ankerabschnitt auf

GE/KG/gj

D 2800 BREMEN 1  ·  EDUARD-GRUNOW-STRASSE 27  ·  TELEFON ( 0421 )  · 7 20 48
TELEGRAMME FERROPAT  ·  TELEX 02 44 020 FEPAT  ·  BREMER BANK 100 9072  ·  POSTSCHECK HAMBURG 25 57 67

einer Schaftseite zum entgegengesetzten Ende des Schaftes und auf der gegenüberliegenden Schaftseite zurück zu einem anderen Ankerabschnitt verlaufen.

3. Spreizbefestiger nach Anspruch 1, dadurch gekennzeichnet, daß die freien Enden der Ankerabschnitte (16; 46) keilförmig und in der Weise zugespitzt sind, daß ihre Spitze oder Schneide (20; 50) am Ende der durchgehenden Außenflanke des Ankerabschnitts liegt und auf der anderen Seite eine schräg nach innen und in Richtung auf den Schaft verlaufende schräge Innenflanke (22; 52) bildet.

4. Spreizbefestiger nach mindestens einem der Ansprüche 1 bis 3, dadurch gekennzeichnet, daß der Durchmesser der Außenkonturen des Befestigers im Bereich des Schaftes (32) größer als im Bereich der Ankerabschnitte (46) ist.

5. Spreizbefestiger nach Anspruch 1 oder 4, dadurch gekennzeichnet, daß der Schaft (32) außen mit axial durchgehenden und in Richtung auf die Ankerabschnitte (46) angeschrägten und radial nach außen abstehenden Flügelabschnitten (40; 40a) versehen ist.

6. Spreizbefestiger nach mindestens einem der Ansprüche 1 bis 5 nach Art eines Nagels, mit einem Kopf und zwei spiegelsymmetrisch angeordneten Ankerabschnitten, dadurch gekennzeichnet, daß die Ankerabschnitte (16) einen im wesentlichen rechteckigen Querschnitt besitzen und zwischen sich in ihrem Ursprungszustand einen durchgehenden Abstand (18) aufweisen.

7. Spreizbefestiger nach mindestens einem der Ansprüche 1 bis 5 nach Art eines Einschlagankers, mit einem Schaftloch, dadurch gekennzeichnet, daß durch kreuzförmiges axiales Einschlitzen einer hülsenförmigen Verlängerung des Schaftes (32) mehr als zwei Ankerabschnitte (46) mit ringsegmentförmigem Querschnitt gebildet sind.

8. Spreizbefestiger nach Anspruch 7, dadurch gekennzeichnet, daß an der den Ankerabschnitten (46) entgegengesetzten Seite des Schaftes (32) eine kopfartige Erweiterung (54) mit im wesentlichen ebener Stirnfläche (34a) gebildet ist.

9. Spreizbefestiger nach mindestens einem der Ansprüche 5 und 7 oder 8, dadurch gekennzeichnet, daß die in Eintreibrichtung vorn liegenden Kanten der Flügelabschnitte (40; 40a) zugespitzt sind.

10. Verfahren zum Herstellen eines Loches, das zur Aufnahme eines Spreizbefestigers nach mindestens einem der Ansprüche 1 bis 6 vorbereitet ist, in einem relativ leicht verformbaren Baumaterial, dadurch gekennzeichnet, daß ein mit einer außenliegenden ringförmigen Schneide und einem schlanken Innenkegel versehenes rohrartiges Werkzeug in das Material eingetrieben und der durch einen hinter dem Innenkegel gelegenen Innenzylinderabschnitt des rohrartigen Werkzeugs geformte Baumaterialkern durch einen Rohrerweiterungssprung, der eine Art Abrißkante bildet, in Stücke zerbrochen wird, so daß auf dem Lochboden ein Kegelstumpf stehengelassen wird, von dessen Außenoberfläche die zugespitzten Enden der Ankerabschnitte des Spreizbefestigers nach außen abgedrängt werden.

11. Werkzeug zum Herstellen von Löchern, die zur Aufnahme und Zentrierung eines Spreizbefestigers nach mindestens einem der Ansprüche 1 bis 6 vorbereitet sind, dadurch gekennzeichnet, daß ein hohler zylindrischer Schaft (68) an seinem freien Ende eine außenliegende ringförmige Schneide (70) aufweist, die innen an einen Hohlkegelstumpf (52) angrenzt, dessen entgegengesetztes Ende in einen Hohlzylinderabschnitt (74) übergeht, dessen in Arbeitsrichtung hinteres Ende durch eine stufenartige Erweiterung (76) des Rohrinnendurchmessers nach Art einer Abrißkante für durch den Hohlkegelstumpf komprimiertes Bearbeitungsmaterial ausgebildet ist.

12. Werkzeug nach Anspruch 11, dadurch gekennzeichnet, daß der Schaft (68) mit einer äußeren Schulterfläche (66) in einen erweiterten hohlen Griff (62; 88) übergeht.

13. Werkzeug nach Anspruch 12, dadurch gekennzeichnet, daß der Griff (62) eine Auslaßöffnung (64) für Bohrklein besitzt.

14. Werkzeug nach Anspruch 12, dadurch gekennzeichnet, daß ein Teil (62a) des hohlen Griffes einstückig mit dem hohlen Schaft (68) verbunden ist, und daß ein zweiter Teil (94) des Griffes lösbar mit dem ersten Griffteil verbunden ist.

15. Werkzeug nach Anspruch 14, dadurch gekennzeichnet, daß das lösbare Griffteil (94) einen Stößel (97) zum Ausstoßen von Bohrklein trägt.

1/2

0007980

FIG. 1

FIG. 2

FIG. 4

FIG. 3

FIG. 5

FIG. 6

FIG. 7

**EUROPÄISCHER RECHERCHENBERICHT**

0007980

Nummer der Anmeldung

EP 79 10 1616

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | US - A - 2 510 693 (GREEN)<br>* Spalte 1, Zeilen 5-9; Spalte 3, Zeilen 28-31; Abbildung 6 *<br>-- | 1,2 |
| | FR - A - 1 305 102 FROHLICH)<br>* Seite 2, linke Spalte, Zeilen 26-30 und 37-40; rechte Spalte, Zeilen 6-11 *<br>-- | 1,3,5,<br>7 |
| | DE - A - 1 400 218 (MOLLER)<br>* Seite 5, Zeilen 16-22 *<br>-- | 1 |
| | FR - A - 2 092 471 (TUFLEX)<br>* Seite 3, Zeilen 1-4 *<br>-- | 1 |
| | GB - A - 718 669 (CARDINEAU)<br>* Seite 1, Zeile 88 bis Seite 2, Zeile 6 *<br>-- | 3,7,8 |
| D | DE - C - 1 887 (BENNET)<br>* Gesamte Druckschrift *<br>-- | 3 |
| | FR - A - 1 267 864 (PIERUCCI)<br>* Zusammenfassung *<br>-- | 4,5,8 |
| | FR - A - 790 800 (PRUDENZANO)<br>* Seite 1, Zeilen 40 bis 42; | 6 |

**KLASSIFIKATION DER ANMELDUNG (Int.Cl. 3)**

F 16 B 15/04
        13/12
E 21 B 10/04

**RECHERCHIERTE SACHGEBIETE (Int. Cl. 3)**

F 16 B 15/00
        13/00
        19/00
B 23 B 51/00
B 25 D 5/00
E 21 C 13/00

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 14-11-1979 | SEIFRIDSBERGER |

EPA form 1503.1 06.78

| Kategorie | EINSCHLÄGIGE DOKUMENTE | | KLASSIFIKATION DER ANMELDUNG (Int.Cl. 3) |
|---|---|---|---|
| | Kennzeichnung des Dokuments mit Angabe, soweit erforderlich, der maßgeblichen Teile | betrifft Anspruch | |
| | Zeiele 50 *  --- | | |
| | <u>CH - A - 271 450</u> (BACHMAN)  * Seite 2, Zeile 79 bis Seite 3, Zeile 15; Seite 3, Zeilen 38-48 *  --- | 10-13 | |
| | <u>US - A - 2 606 615</u> (SIMPSON LOG-GING CO.)  * Spalte 3, Zeilen 26-67 *  --- | 11-14 | |
| | <u>US - A - 2 614 809</u> (ZUBLIN)  * Spalte 3, Zeilen 18-30 *  --- | 10,11 | RECHERCHIERTE SACHGEBIETE (Int. Cl. 3) |
| | <u>DE - C - 119 771</u> (FAUCK)  * Seite 1, rechte Spalte, Zeilen 9-14 *  --- | 10,11 | |
| A | <u>US - A - 2 321 101</u> (OPENSHAW)  ---- | | |

EPA Form 1503.2   06.78